# EUROPEAN PATENT APPLICATION

(11) **EP 4 525 489 A1**
(43) Date of publication of application: **19.03.2025**
(21) Application number: 23819220.7
(22) Date of filing: 08.06.2023
(51) Int. Cl.: H04W 4/02, H04W 64/00

(54) **INFORMATION TRANSMISSION METHOD AND APPARATUS**

(30) Priority: 08.06.2022 CN 202210644534
(71) Applicant: ZTE CORPORATION, Shenzhen, Guangdong 518057 (CN)
(72) Inventor: YUAN, Zhifeng, Shenzhen, Guangdong 518057 (CN); MA, Yihua, Shenzhen, Guangdong 518057 (CN); XIA, Shuqiang, Shenzhen, Guangdong 518057 (CN); YU, Guanghui, Shenzhen, Guangdong 518057 (CN); HU, Liujun, Shenzhen, Guangdong 518057 (CN)
(74) Representative: Pennacchio, Salvatore Giovanni
(86) International application number: PCT/CN2023/099172
(87) International publication number: WO 2023/237056

(57) **Abstract**

Provided in the embodiments of the present invention are an information transmission method and apparatus. The method comprises: transmitting, by a first communication node in a non-connected state, a data packet to a second communication node on a pre-configured common channel, wherein the data packet comprises at least one piece of the following information: a cell identifier received by the first communication node; a base station identifier received by the first communication node; a beam identifier received by the first communication node; and a wireless signal access point identifier received by the first communication node.

## Description

### Technical Field

The embodiments of the present invention relate to the field of communications, and in particular, to an information transmission method and apparatus.

### Background

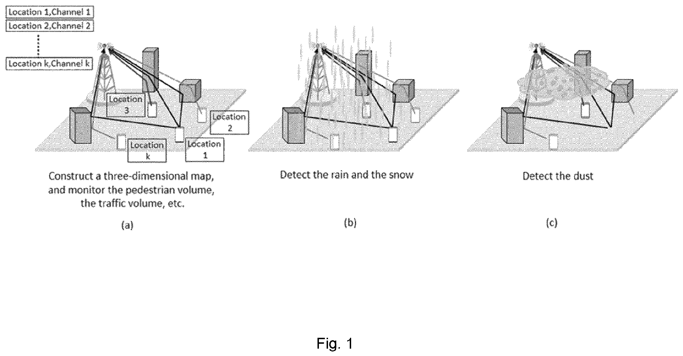

Future wireless communication systems require integration of sensing and communication (ISAC). If a system can obtain location information of a large number of terminals, and can also know information of channels that wireless signals transmitted by these terminals pass through, i.e. know channels that electromagnetic waves transmitted by these locations pass through to reach a base station, as shown in Fig. 1(a), then these information can be used to do many things, for example, constructing an environment map; monitoring weather conditions such as rainfall and snowfall in real time, in particular, storm and snow weather, and monitoring sand dust, dust, chemical gases, etc. in real time, as shown in Figs. 1(b) and 1(c); monitoring the pedestrian volume, the traffic volume, etc., which can assist traffic and can also be used as information for assisting public management; sensing the number of terminals in one place, and then realizing the security protection function by means of a communication signal; and realizing base station saving energy and load balancing, etc.

However, the terminals are required to transmit their own location information, which increases power consumption of the terminals. Therefore, most private user terminals may be averse to the requirement of "transmit your own location information". For example, if the function "transmit your own location information" is optional, many users will shut down the function. Or, this could lead some terminals to market themselves as a selling point for not transmitting location information. These aversions will greatly reduce the number of terminals that can provide location information, and eventually degrade the performance of the relevant schemes that rely on "locations and the corresponding wireless channel information thereof".

In addition, in some scenarios, a terminal cannot obtain conventional location information, and if an indoor terminal cannot send a location accordingly, the number of terminals that can provide location information may also be greatly reduced, thereby finally reducing the performance of a relevant scheme that relies on "locations and the corresponding wireless channel information thereof".

On the other hand, an important scenario in future wireless communication systems is the Internet of Thing (IoT) or massive Machine Type Communication (mMTC). However, in an loT or an MTC communication scenario, an important type of services needs to know the location of a user equipment (UE).

In order to improve the performance of the relevant schemes based on the "location information provided by the terminal" and the "corresponding wireless channel information", the problem of power consumption caused by the terminal transmitting the location information needs to be alleviated.

### Summary

The embodiments of the present invention provide an information transmission method and apparatus, so as to at least solve the problems faced in the art in alleviating the transmission of location information by terminals

According to an embodiment of the present invention, provided is an information transmission method, applied to a first communication node, comprising: transmitting, by the first communication node in a non-connected state, a data packet to a second communication node on a pre-configured common channel, wherein the data packet comprises at least one piece of the following information: a cell identifier received by the first communication node; a base station identifier received by the first communication node; a beam identifier received by the first communication node; and a wireless signal access point identifier received by the first communication node.

According to another embodiment of the present invention, provided is an information transmission method, applied to a second communication node and comprising: receiving, on a public channel, a data packet sent by a first communication node in a non-connected state, wherein the data packet comprises at least one piece of the following information: a cell identifier received by the first communication node; a base station identifier received by the first communication node; a beam identifier received by the first communication node; and a wireless signal access point identifier received by the first communication node.

According to yet another embodiment of the present invention, provided is an information transmission apparatus, applied to a first communication node, comprising: a first sending module, configured to send a data packet to a second communication node on a pre-configured common channel when the first communication node is in a non-connected state, wherein the data packet comprises at least one piece of the following information: a cell identifier received by the first communication node; a base station identifier received by the first communication node; a beam identifier received by the first communication node; and a wireless signal access point identifier received by the first communication node.

According to yet another embodiment of the present invention, provided is an information transmission apparatus, applied to a second communication node, and comprising: a first receiving module, configured to receive, on a public channel, a data packet sent by a first communication node in a non-connected state.

According to yet another embodiment of the present invention, further provided is a computer readable storage medium storing a computer program, wherein the computer program is configured to execute, when running, the steps in any one of the described method embodiments.

According to another embodiment of the present invention, further provided is an electronic device, comprising a memory and a processor, wherein the memory stores a computer program, and the processor is configured to run the computer program to execute the steps in any one of the method embodiments.

### Brief Description of the Drawings

Fig. 1 is a schematic diagram of realizing integration of sensing and communication in the related art;
Fig. 2 is a schematic structural diagram of an information transmission system according to an embodiment of the present invention;
Fig. 3 is a flowchart of an information transmission method according to an embodiment of the present invention;
Fig. 4 is a flowchart of an information transmission method according to another embodiment of the present invention;
Fig. 5 is a structural block diagram of an information transmission apparatus according to an embodiment of the present invention;
Fig. 6 is a structural block diagram of an information transmission apparatus according to another embodiment of the present invention;
Fig. 7 is a schematic diagram of a conventional pilot scheme;
Fig. 8 is a schematic diagram of the transmission preamble in the conventional pilot scheme;
Fig. 9 is a schematic diagram of the pilot composition according to an embodiment of the present invention;
Fig. 10 is a schematic diagram of the pilot composition according to another embodiment of the present invention;
Fig. 11 is a schematic diagram of a method for generating a Preamble sequence according to an embodiment of the present invention;
Fig. 12 is a schematic diagram of using unassociated or independently generated sequences as a preamble according to an embodiment of the present invention;
Fig. 13 is a schematic diagram of a demodulation reference signal port set;
Fig. 14 is a schematic diagram of a reference signal set including M PRBs according to an embodiment of the present invention;
Fig. 15 is a schematic diagram of a constellation diagram variation of BPSK symbols according to an embodiment of the present invention;
Fig. 16 is a schematic diagram of sparse pilots according to an embodiment of the present invention;
Fig. 17 is a schematic diagram of reference signal distribution according to an embodiment of the present invention;
Fig. 18 is a schematic diagram of the implementation of defining a reference signal according to an embodiment of the present invention;
Fig. 19 is a schematic diagram of a data packet including W extremely sparse reference signals according to an embodiment of the present invention;
Fig. 20 is a flowchart of an information transmission method according to still another embodiment of the present invention.

### Detailed Description of the Embodiments

The embodiments of the present invention are described in detail with reference to the accompanying drawings and in conjunction with the embodiments.

It should be noted that the terms "first", "second" etc., in the description, claims, and accompanying drawings of the present disclosure are used to distinguish similar objects, and are not necessarily used to describe a specific sequence or order.

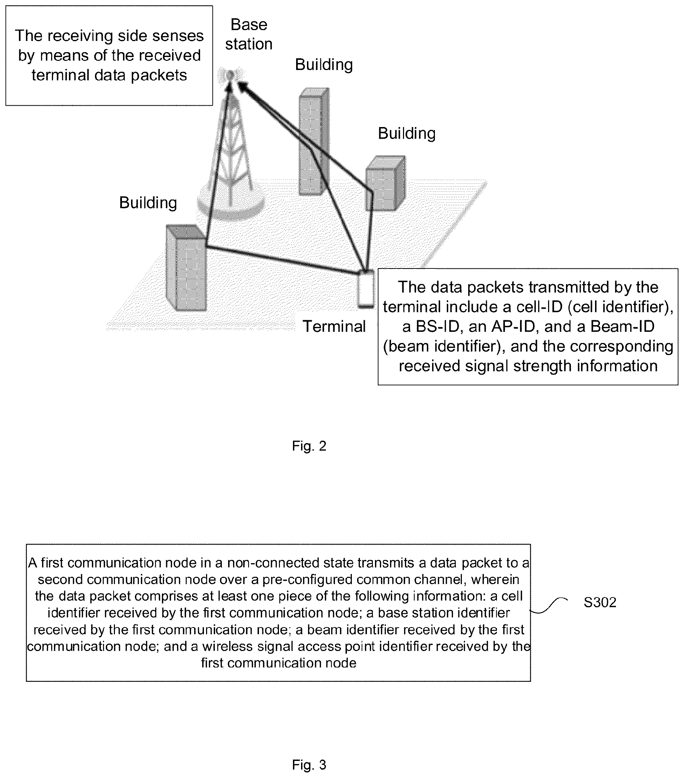

Fig. 2 is a schematic structural diagram of an information transmission system according to an embodiment of the present invention. As shown in Fig. 2, the system includes a base station and a terminal; in the system, the terminal cannot directly send the location information thereof, and the terminal will send relevant information of a cell identifier (cell-ID) and a base station identifier (BS-ID), a wireless signal access point identifier (AP-ID) and a beam identifier (Beam-ID) together to a base station in the form of a data packet; the base station determines the location of the terminal according to the received data packet, and further estimates and obtains, by means of the wireless signal bearing the data packet, wireless channels that wireless signals transmitted by the terminal pass through, and then senses the surrounding environment, thereby meeting the requirement of the wireless communication system on the ISAC. On the other hand, the base station may also perform related applications of the Internet of things according to the received data packet.

The present embodiment provides an information transmission method running in the described information transmission system. Fig. 3 is a flowchart of an information transmission method according to an embodiment of the present invention. The method is applied to a first communication node. As shown in Fig. 3, the flow comprises the following steps:
step S302, a first communication node in a non-connected state transmits a data packet to a second communication node on a pre-configured common channel, wherein the data packet comprises at least one piece of the following information: a cell identifier received by the first communication node; a base station identifier received by the first communication node; a beam identifier received by the first communication node; and a wireless signal access point identifier received by the first communication node, wherein the second communication node is a base station or an access point. The first communication node is equivalent to the terminal in Fig. 1, and the second communication node is equivalent to the base station in Fig. 1.

In an exemplary embodiment, the wireless signal access point identifier comprises one of the following: an identifier of a cell-free communication system access point; an identifier of a wireless local area network access point; an identifier of a wireless wide area network access point; and an identifier of a Bluetooth access point. In the present embodiment, the wireless local area network access point comprises a wireless local area network router or a WIFI router.

In an exemplary embodiment, the data packet further comprises at least one piece of the following information: the strength of a wireless signal corresponding to the cell identifier; the strength of a wireless signal corresponding to the base station identifier; the strength of a beam corresponding to the beam identifier; and the strength of a wireless signal corresponding to the wireless signal access point identifier.

In an exemplary embodiment, the cell identifier is a cell identifier of a plurality of cells; the base station identifier is a base station identifier of a plurality of base stations; the base station identifier is a base station identifier of a plurality of base stations; and the beam identifier is an identifier of a plurality of beams.

In an exemplary embodiment, the cell identifier is partial information among total identifier information of a cell, the base station identifier is partial information of total identifier information of a base station, the wireless signal access point identifier is partial information among total identifier information of the wireless signal access point, and the beam identifier is partial information among total beam identifier information.

In the present embodiment, the Cell-ID or BS-ID or AP-ID or Beam-ID usually exists in the form of a string of bit sequences. In some scenarios, some IDs require more bits for representation, for example, one Cell-ID has 12 bits, or one MAC address of a WIFI router, that is, the identifier of the WIFI router may have more bits, and if the data packet transmitted by the terminal needs to include a plurality of Cell-IDs, or the MAC address of a plurality of WIFI routers, the total number of bits transmitted will be relatively large, and in this case, only some bits of the identifier can be transmitted, for example, only eight bits are transmitted, because in an area, the Cell-ID of a cell usually has some bits that are the same and some bits that are different. Therefore, the terminal only needs to transmit those cell identifiers that can distinguish the cells, which can save the transmission overhead.

In the present embodiment, before step S302, the method further comprises: receiving, by the first communication node, broadcast signaling sent by the second communication node for indicating the position of the pre-configured common channel. Here, the location of the common channel generally refers to a time-frequency resource.

In the present embodiment, before step S302, the method further comprises: spreading, by means of an spreading sequence, modulation symbols formed after performing code modulation on the data packet, so as to obtain spreading symbols; and transmitting the spreading symbols to the second communication node.

In an exemplary embodiment, wherein the spreading sequence is determined by information in the data packet.

In an exemplary embodiment, the spreading sequence is from a set comprising V spreading sequences, the spreading sequence is determined from the set of spreading sequences by log2(V) bits in the data packet, V being an integer greater than 1, and log2() is a logarithmic function taking 2 as a base.

Step S302 in the present embodiment comprises: determining W pilots; and transmitting the data packet and the W pilots together to the second communication node, wherein W is an integer greater than 1.

In an exemplary embodiment, the W pilots are independent.

In an exemplary embodiment, the W pilots are determined by information in the data packet.

In an exemplary embodiment, the W pilots are determined by several bits in the data packet.

In an exemplary embodiment, the W pilots are from a pilot set comprising M pilots, each pilot is determined from the pilot set by log2(M) bits in the data packet, and M is an integer greater than 1.

In an exemplary embodiment, wherein at least two pilots among the W pilots come from different pilot sets.

In an exemplary embodiment, the lengths of at least two pilots among the W pilots are different.

In an exemplary embodiment, for W pilots, each pilot has only U symbols that are non-zero values, U being an integer greater than 0 and less than 5.

In an exemplary embodiment, W is 2.

In an exemplary embodiment, transmitting the data packet to the second communication node comprises: determining one pilot, wherein only U symbols of the pilot are non-zero values, and U is an integer greater than 0 and less than 5; and transmitting the data packet and the pilot to the second communication node together.

In an exemplary embodiment, the non-connected state is one of an idle state and an inactive state, wherein the non-connected state is a state when a connection between the first communication node and the second communication node is not established.

In an exemplary embodiment, the data packet comprises information related to the identity of the first communication node; and is applied to an Internet of Things applications based on location information, for example, asset tracking, logistics management, and the elderly, or children or pets loss prevention. In such an application scenario, the acquisition and utilization of location information generally needs to obtain the user's permission in advance.

In an exemplary embodiment, the data packet does not include information related to the identity of the first communication node; and is applied to environment awareness applications based on location information. For such applications, it only needs to know channels that electromagnetic wave signals transmitted from some locations pass through to reach a base station, and it does not need to know who transmits the electromagnetic wave signals. An important advantage of not including information related to the identity of the first communication node in the data packet is that it can avoid privacy or ethical problems. Conversely, if information related to the identity of the first communication node is also included in the data packet, there may be a series of privacy or ethical problems. Most private user terminals may not want others to know their location and thus resist the requirement of "transmitting the received cell identifier or base station identifier or beam identifier or wireless signal access point identifier, or the strength information thereof". These aversions will greatly reduce the number of terminals that can provide location information, and eventually degrade the performance of the relevant schemes that rely on "locations and the wireless channel information thereof". Therefore, in the present embodiment, privacy or ethical problems caused by transmitting the location information by the terminal may be avoided, and user's concerns may be reduced; thus, the number of terminals that can provide location information can be greatly increased, thereby improving the performance of various schemes based on "the location and the corresponding wireless channel information thereof".

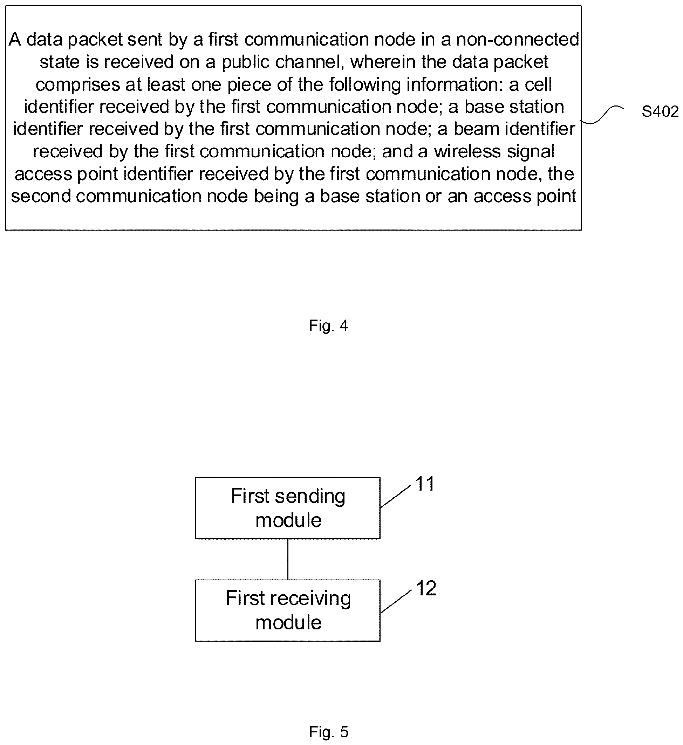

Fig. 4 is a flowchart of an information transmission method according to another embodiment of the present invention. The method is applied to a second communication node. As shown in Fig. 4, the method comprises the following steps:
Step S402: a data packet sent by a first communication node in a non-connected state is received on a public channel, wherein the data packet comprises at least one piece of the following information: a cell identifier received by the first communication node; a base station identifier received by the first communication node; a beam identifier received by the first communication node; and a wireless signal access point identifier received by the first communication node, the second communication node being a base station or an access point.

In the present embodiment, before step S402, the method further includes: sending, to the first communication node, broadcast signaling used for indicating the position of the common channel.

By means of the described step, since the first communication node can directly transmit relevant information data in a non-connected state, it does not need to enter a connected state or an active state for retransmission, so that the process of transmitting relevant information by the first communication node is as simplified as possible. Therefore, the problem in the related art that the power consumption caused by transmitting relevant information by a terminal needs to be alleviated can be solved, and the performance of the relevant schemes based on the "location information provided by the terminal and the corresponding wireless channel information" can be improved.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present invention, or in other words, the part of the technical solutions making contributions to the prior art, may be embodied in the form of a software product stored in a storage medium (such as a Read-Only Memory (ROM) or Random Access Memory (RAM), a magnetic disk and an optical disc), including a number of instructions for enabling a terminal device (which may be a mobile phone, a computer, a server, or a network device, etc.) to perform the methods described in various embodiments of the present invention.

The present embodiment further provides an information transmission apparatus, the apparatus is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

Fig. 5 is a structural block diagram of an information transmission apparatus according to an embodiment of the present invention. The apparatus is applied to a first communication node. As shown in Fig. 5, the apparatus includes a first sending module 11 and a first receiving module 12.

The first sending module 11 is configured to send a data packet to a second communication node on a pre-configured common channel when the first communication node is in a non-connected state, wherein the data packet comprises at least one piece of the following information: a cell identifier received by the first communication node; a base station identifier received by the first communication node; a beam identifier received by the first communication node; and a wireless signal access point identifier received by the first communication node.

The first receiving module 12 is configured to receive broadcast signaling sent by the second communication node and used for indicating the position where the pre-configured common channel is located.

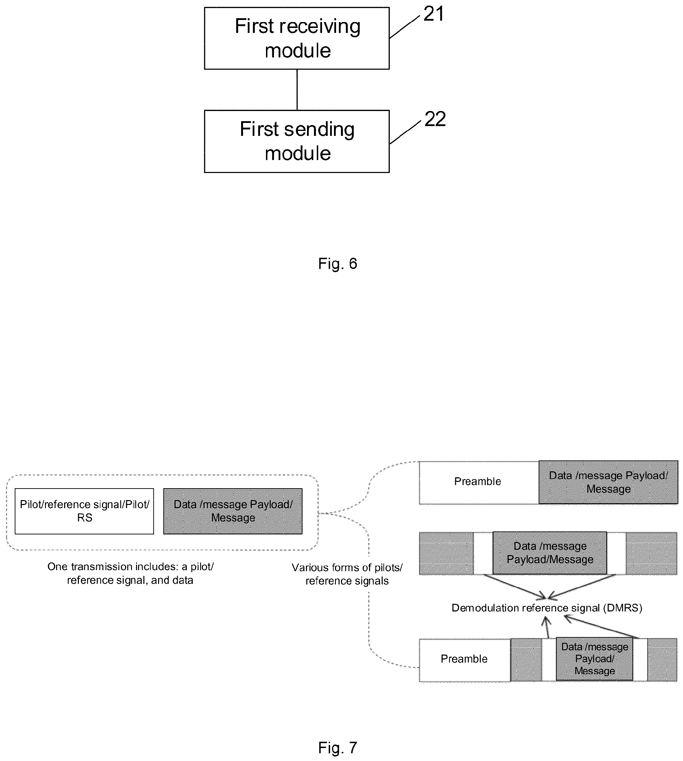

Fig. 6 is a structural block diagram of an information transmission apparatus according to another embodiment of the present invention. As shown in Fig. 6, the apparatus comprises: a first receiving module 21 and a first sending module 22.

The first receiving module 21 is configured to receive, on a public channel, a data packet sent by a first communication node in a non-connected state.

The first sending module 22 is configured to send, to the first communication node, broadcast signaling used for indicating the time-frequency resource of the common channel.

It should be noted that the modules above may be implemented by software or hardware, and the latter may be implemented in the following manner, but is not limited thereto: the modules are located in the same processor; or the modules are located in different processors in an arbitrary combination.

To facilitate understanding of the technical solutions provided in the present invention, hereinafter, it will be described in detail in combination with the embodiments of the specific scenario.

Conventional uplink information transmission or uplink data transmission requires a terminal to be in a connected state (or RRC connected state). However, even if the terminal in the connected state does not have a dedicated uplink transmission resource, the terminal in the connected state still needs to apply for an uplink transmission resource from the base station before transmitting data each time, and can transmit information on a time-frequency resource specified by the base station only after obtaining an uplink resource grant or resource scheduling of the base station. Hence, many operations need to be completed in advance for the terminal to complete the conventional uplink data transmission once. If the terminal is required to transmit the received cell identifier or base station identifier or beam identifier or wireless signal access point identifier or the strength information thereof by using a conventional uplink data transmission mechanism, the power consumption of the terminal is significantly increased, and the signaling overhead of the system is also increased. The more specific analysis is as follows:
(1) In order to save power, the terminal has a very low frequency of transmitting the identifiers and the strength information thereof, and the transmission is usually performed once for several seconds, tens of seconds, or even several minutes. However, when there is no need for transmission or there is no other services, in order to save power, the terminal is usually in an idle state or an inactive state of a deep sleep, that is, in order to save power, the terminal usually does not enter a connected state (i.e., it is not in a connected state). As some operations are required for the terminal to enter the connected state or maintain the connected state, it increases the power consumption of the terminal; and as the terminal in the disconnected state, i.e., the idle state or the inactive state, does not require these operations, it saves power. That is to say, when the terminal does not need to transmit or has no other services, the terminal is generally disconnected from the system, that is, the terminal is in a non-connected state; when the terminal is originally in a non-connected state, if the existing uplink data transmission scheme is used, in order to transmit these identifiers and the strength information thereof, the terminal has to establish a connection with the system before transmission; only after entering a connection state (also referred to as an active state), a terminal can further apply for an uplink transmission resource from a system (e.g. a base station or an access point), and real information transmission cannot be performed until the resource grant of the system is obtained.

In the present embodiment, expressions such as Non-Connected state or Non RRC Connected state or Connectionless state or Connection-free state, or Disconnected state all refer to no connection, while expressions commonly used in relevant standards or documents, which are an idle state and an inactive state, are equivalent to the non-connected state in the embodiments of the present invention, or in other words, the idle state or inactive state is also a non-connected state.

(2) A random access process is required for a terminal to enter a connection state from a non-connected state; the random access process requires the terminal to perform multiple interactive procedures with a base station, comprising: the terminal sends a preamble, the base station performs a random access response (RAR), the terminal sends L2/L3 control information, and base station sends a terminal message 4 (Message4), which undoubtedly greatly increases the power consumption of the terminal for each transmission of location information. Further, if the existing uplink data transmission scheme is used, the number of terminals that transmit the received identifier information is large, if a large number of terminals need to enter a connected state before transmitting the received identifier information, a large number of terminals perform random access, and then apply for uplink resource grant, and a large number of terminals mean that a random access process itself has a high probability of collision or blocking, as a result, many terminals require multiple access attempts to succeed, and the final result is that the energy consumed by the terminal to complete the task of information transmission is further increased significantly. This is obviously unacceptable.

(3) Another conventional uplink data transmission method is semi-persistent scheduling (SPS), which aims to reduce physical control signaling overhead and delay of a small data packet service, and is quite applicable to periodic services, such as Voice-over-IP (VoIP). VoIP has a substantially constant data rate during talk spurt, and a voice packet is generated every 20 ms. The time of each talk spurt is on an average of 1 to 2s, and contains 50 to 100 voice packets, and the small-scale fading therebetween is compensated by means of closed-loop power control, so as to ensure that a signal-to-noise ratio (SNR) of a signal at a receiving side is substantially constant. Therefore, the modulation and coding scheme (MCS) during this period of time may remain unchanged, the physical resources allocated may remain unchanged, or may jump according to a fixed rule, and thus no dynamic signaling is required. The SPS may be considered as an enhancement form of semi-static configuration, and is mainly used for periodic small packet services with a constant packet size. The SPS generally works in a RRC connected state, that is, the terminal has completed an initial access process. Although the frequency of scheduling is far lower than the arrival frequency of a data packet, it is basically not contention-based, and different users will not experience resource collisions, for example, collisions of reference signals/pilots will not occur. In a 5G system, an evolved SPS can be used in a scenario of ultra-reliable low-latency communications (URL LC), thereby ensuring high reliability, and reducing a delay of a user plane. In this case, the SPS is referred to as a Configured Grant, i.e. pre-configured resource grant. The Configured Grant is also considered as a special grant-free method or grant-free scheduling method, and since the "dynamic grant application" or the "dynamic scheduling application" of each data transmission can be omitted, the essence thereof is "dynamic grant-free" or "dynamic scheduling-free". It should be noted that, in the SPS "dynamic scheduling-free", transmission resources of different users are substantially pre-configured by a base station, and are not obtained by a user by means of "contention", and therefore can be said to be not "contention-based". The most important point is that, for such non-competitive scheduling-free, the reference signals are generally prevented from "collision" by pre-configuration of the base station, for example, it can be ensured by the pre-configuration of the base station that the reference signals of users transmitted on the same time-frequency resource are orthogonal.

Although pre-configured scheduling-free, such as SPS or Configured Grant, can reduce the overhead of uplink transmission of physical control signaling, if information reporting of the received cell identifier or base station identifier or beam identifier or wireless signal access point identifier and the strength information thereof by a large number of users is realized by means of the SPS, the spectrum efficiency of the system is still very low. This is because: if a terminal applies for periodic transmission resources for a period of time in a cell, but the terminal performs a cell handover during this process, then it will need to apply for a new pre-configured transmission resource from the cell that it newly enters, while notifying the cell that it leaves to release the pre-configured resources. The terminal re-applies for a transmission resource from the cell it newly enters is a relatively complex process, which will significantly increase the power consumption of the terminal. However, in the scenario of transmitting the received cell identifier or the base station identifier or beam identifier or the wireless signal access point identifier, and the strength information thereof, in order to save power, the frequency at which the terminal transmits information is not too frequent, that is, it is best to transmit information once at a relatively long time interval. In order to improve the efficiency, the interval of the pre-configured resources is usually relatively long, which means that adverse effects caused by a cell handover will be significantly increased, which will significantly reduce the spectrum efficiency of the system and increase the complexity of the system. If different terminals or nodes are fixed, but the environment around the terminals or nodes is easy to change over a long time, this will also lead to a cell handover, especially terminals or nodes at the edge of a cell.

It can be determined from the above analysis that although the SPS pre-configuration mechanism can also implement grant-free transmission or schedule-free transmission, it is not suitable for a scenario in which a large number of terminals transmit the received cell identifier or base station identifier or beam identifier or wireless signal access point identifier, and the strength information thereof.

Hence, in order to enable the terminal to transmit the information as power-saving as possible, and to save the signaling overhead of the system, when there is no transmission task, the terminal may always be in a non-connected state, that is, an RRC Idle state or an inactive state, in this way, the terminal may sleep deeply and switch off all transmission-related circuits. When there is information to be transmitted, the terminal in the non-connected state or RRC Idle state or inactive state may not need to establish a connection with a system in advance, and also does not need to request a base station or an access node to allocate uplink transmission resources, that is, it does not need to obtain the grant and scheduling of the uplink transmission resource, and instead, the terminal autonomously initiates the information transmission directly. Because the terminal completes transmission in a disconnected state, the terminal does not need to release the connection after completing transmission, and may immediately enter a disconnected state or an idle state (a deep sleep state) where the device is almost shutdown. In this way, this allows for a highly simplified information transmission in a non-connected state, and the system spectral efficiency and terminal power consumption can be optimized to the extreme.

This means that the terminal can autonomously decide when to transmit the cell identifier or the base station identifier or beam identifier or the wireless signal access point identifier and which are received by the terminal itself and the strength information thereof, and then directly transmit the information. Before transmission, there is no need to notify a base station or a system, and there is also no need to apply for a transmission resource from the base station. It also means that the base station or the system does not need to arrange a dedicated time-frequency resource for relevant information transmission of each terminal, in other words, it does not need to arrange a different time-frequency resource for relevant information transmission of each terminal. The base station or the system only needs to configure a common channel, for example, configure such a common channel by means of broadcasting information, and notify all terminals to transmit information thereof on the common channel. However, since transmission is initiated by a terminal autonomously, the base station does not need to control, nor does it need to be concerned with which terminals are involved or how many terminals are involved in each transmission, and the base station can obtain location information thereof only by decoding transmission information of each terminal from a received signal by means of multi-user detection; in addition, the base station can estimate the wireless channel of each user from the received signal, so that the location information and the corresponding wireless channel information can be obtained.

Certainly, the drawbacks of such non-connected location information transmission are also very pronounced. The base station may receive, on the same time and frequency resources, data packets sent by many different terminals. The transmission of these data packets may be contention-based, and thus there may be a resource collision. Especially for a scenario with a large number of terminals, a user has a high load, the collision may be very serious, and separating these data packets is a great challenge for a base station.

In order to improve the location information demodulation performance under a user load, the location information can be transmitted by means of encoded and modulation symbols using the symbol spreading technology, i.e. each modulation symbol will be spread by means of an spreading sequence with the length of L to generate L symbols, assuming that the nth modulation symbol is sn and the spreading sequence with the length of L is [c1, c2,... cL], then the nth modulation symbol becomes L symbols after being spread by the spreading sequence with the length of L, i.e. sn*c1, sn*c2...sn*cL. If there are a total of N modulation symbols in transmission information in transmission without using the symbol spreading technique, then there will be N*L modulation symbols in transmission information in the case of using the symbol spreading technique and having an spreading sequence of L. This may provide multi-user separation capability for the code domain. In addition, symbol spreading is performed on each symbol, and if the spreading symbol is transmitted in the frequency domain, the modulation symbol may use a better diversity effect. If the transmission is a power-limited scenario and the spreading symbol is transmitted in the time domain, each modulation symbol may have an energy accumulation of L times, and the signal-to-noise ratio may be improved by L times.

In wireless communications, a pilot is generally required to be inserted into a transmission signal or a transmission data packet, so that a receiver first estimates, by using the pilot, a channel that the transmitted signal or the data packet passes through, and a time-frequency offset, thereby implementing demodulation of data symbols in the data packet. A pilot included in the transmission signal or the transmission data packet, which may also be referred to as a pilot signal or a reference signal (RS) or a demodulation reference signal (DMRS); formally, a pilot is generally a sequence or a string of symbols, and therefore it is also referred to as a pilot sequence.

In the non-connected state, since the terminal has not entered the connected state, the pilot designated by the base station or the access point cannot be obtained, and therefore the pilot used when data packets are transmitted, or the pilot transmitted together with the data packets needs to be independently selected or generated by the terminal. Here, selecting a pilot refers to that the terminal selects a pilot from a preset pilot set or a pilot set; generating a pilot refers to that a terminal generates a pilot according to a preset rule or a formula; here, all the pilots generated according to the preset rule or the formula also constitute the preset pilot set or the pilot set, and therefore in this sense, generating a pilot according to a preset rule or a formula is also equivalent to selecting a pilot from a preset pilot set, and the two are equivalent; selecting a pilot from a preset pilot set is taken as an example for illustration as follows. Hence, autonomously selecting a pilot refers to that a terminal itself decides how to select a pilot from a preset pilot set without signaling indications or arrangements of a base station or an access point, and only in this way, a transmitted pilot can be determined in a non-connected state. If a pilot required for the transmission of a terminal is indicated or arranged by a base station, a signaling indicating the pilot and sent by the base station needs to be obtained before the terminal transmits the data packet. In this way, the terminal needs to obtain a connection with the base station before transmitting the data packet. Therefore, a series of processes of establishing a connection are required, and all the problems of conventional transmissions under connection also exist. Hence, a terminal transmits a data packet (including a cell identifier or a base station identifier or beam identifier or a wireless signal access point identifier which are received by the terminal, and the strength thereof) to a base station or an access point in a non-connected state, and a pilot included in transmission is necessarily selected by the terminal autonomously, that is, the terminal makes a decision autonomously.

However, the autonomous selection of a terminal may cause a problem: since no central node performs an overall arrangement on pilots used by different terminals, different terminals autonomously select a pilot from a preset pilot set having a limited number of pilots, and it is possible to select the same pilot, which is a so-called pilot collision. However, in a scenario of high overload, that is, in a scenario of many access terminals, the probability of pilot collision is very high. Once the pilots of different terminals collide, it is difficult for the base station to demodulate the data packets of these terminals through the pilots. Hence, if the pilot collision is not processed well, the performance of transmission in a non-connected state will deteriorate seriously. A conventional pilot scheme is used to implement transmission in a non-connected state, and the specific technical reason for high probability of pilot collision is as follows. Fig. 7 is a schematic diagram of the conventional pilot scheme, and a pilot or reference signal in Fig. 7 may be a preamble or a demodulation reference signal (DMRS); the pilot may be located in front of or in the middle of the data. The conventional pilot scheme has an obvious feature:
it can be considered that there is only one or one type of pilot or reference signal included in each transmission, wherein one or one type refers to that the pilot is composed of one sequence or a multiple associated sequences. For example, taking a preamble as an example, a transmission includes one preamble, or includes multiple associated preamble sequences; for example, the transmission may include two preambles [P1, P2], but the two preambles are formed by simply repeating one preamble sequence P, that is, P1=P2=P; such a preamble scheme may be used for estimation of a time-frequency offset;

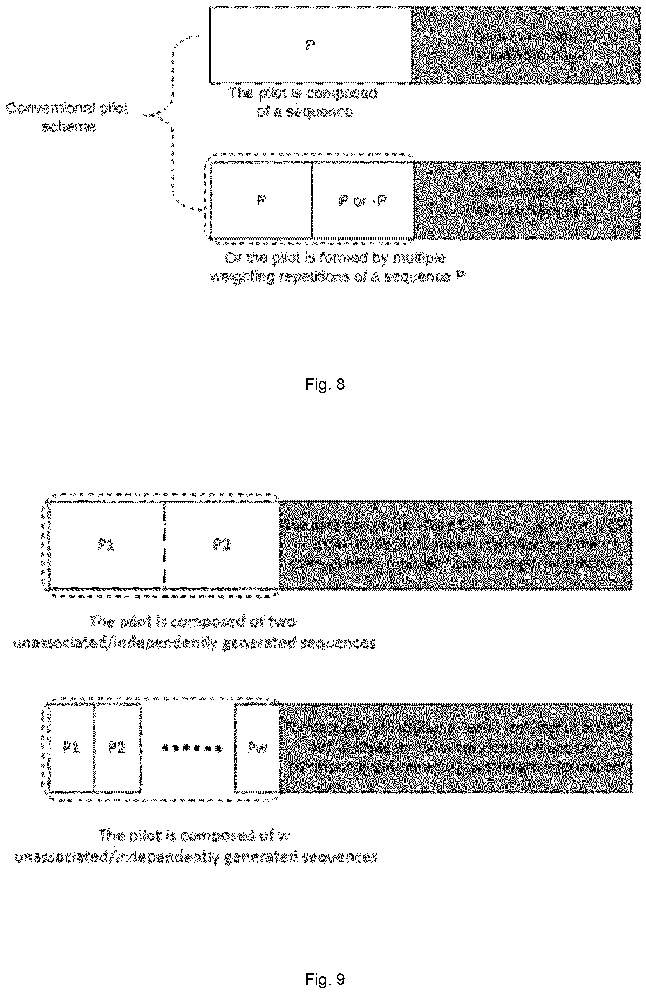

Alternatively, as shown in Fig. 8, the transmission can include two pilot sequences [P1, P2], however, [P1, P2] are formed by weighting and repeating one preamble sequence P by an orthogonal cover code (OCC), i.e. it can be P1 = P, P2 = P, or P1 = P, P2 = -P, and the terminal randomly selects the pilot sequence P and the OCC code.

Alternatively, the transmission may include two preambles [P1, P2]; however, [P1, P2] are formed by other weighting and repeating one preamble sequence P, i.e. it may be P1=αP and P2=βP, wherein α and β are weighted values. For example, the OCC weight is a special case of [a, β] = [1, 1] or [1, -1], and such a preamble scheme may further increase the number of preambles, but may destroy the orthogonality of the preamble.

By the same reasoning, taking a DMRS as an example, a transmission may include a DMRS or multiple associated DMRSs.

For example, it may include two DMRSs [P1, P2], but the two DMRSs are formed by simply repeating one DMRS sequence, that is, P1=P2=P;
or the two DMRSs are formed by the OCC weighting and repeating one DMRS sequence, i. e. P1=P2=P, and P1=P, P2=-P;
or, the two DMRSs are formed by other weighting and repeating one DMRS sequence, that is, P1 = αP, P2 = βP, α and β being weighted values, for example, the OCC weight is that [α, β]=[1, 1] or [1, -1].

In some schemes, there are both a Preamble and a DMRS, and the Preamble and the DMRS may have the above features respectively. Furthermore, Preamble and DMRS are related, and generally, once Preamble is determined, the corresponding DMRS is also determined.

Since the overhead of a pilot is limited, the number (N) of pilots included in a pilot set is usually not large, for example, N=64. However, there is usually one or one type of pilot/reference signal in the conventional scheme; in a transmission scenario in a non-connected state, if there are many terminals performing transmission at the same time, the probability of collision is relatively high, for example, if N = 64, the probability of pilot collision of any two terminals is already 1/64, and if there are many terminals performing transmission at the same time, the probability of collision is far greater than 1/64.

Fig. 9 is a schematic diagram of the pilot composition according to an embodiment of the present invention. In the present embodiment, a terminal in a non-connected state transmits a data packet to a base station or an access point. A pilot used during transmission of a data packet, or a pilot transmitted together with the data packet, includes two or more pilots, and the pilots are independent or unassociated or unrelated, or a pilot signal transmitted at one time is formed by two or more independent or unassociated or unrelated pilot sequences.

Further, the data packet transmitted together with the plurality of pilots may include information for generating or acquiring the plurality of pilots. For example, the data packet may include the index numbers of these pilots in a pilot set or an initial state of generating the pilots, in this way, once a data packet of a terminal is successfully decoded, information of all the pilots used in this transmission of the terminal can be learned, and then all the pilots can be reconstructed, so that interference of the pilot signals can be eliminated.

### Embodiment I

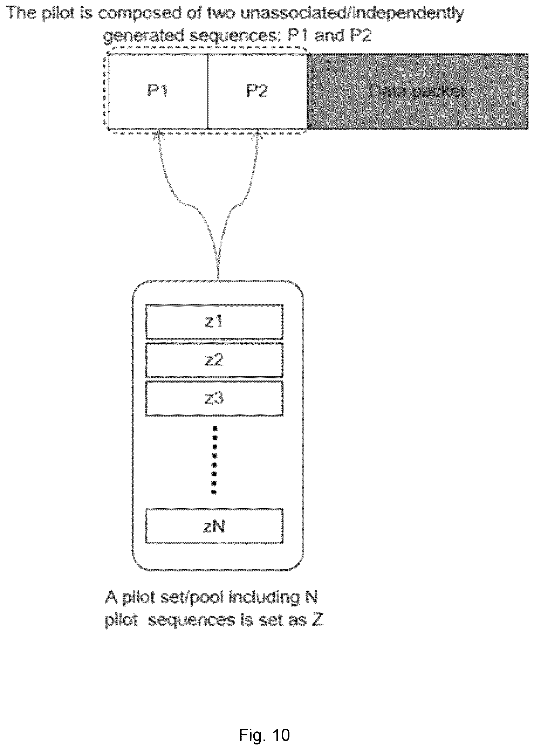

Fig. 10 is a schematic diagram of the pilot composition according to another embodiment of the present invention. As shown in Fig. 10, P1 and P2 are both selected from a pilot set including N pilot sequences or a pilot set Z. P1 and P2 selected by the terminal from Z are independent or unassociated or unrelated. Specifically, if N=2^{m}, m bits are required to determine a sequence from Z, that is, a sequence may be selected from Z by using m bits as an index. Hence, selecting P1 from Z by the terminal needs m bits, and selecting P2 needs another m bits. The case where selecting P1 requires m bits is independent from the case where selecting P2 requires m bits.

In specific implementation, P1 and P2 may be determined respectively according to two groups of bits (m bits in each group) in the data packet. In this way, once a data packet of a terminal is decoded correctly, a receiver can know P1 and P2 used by the terminal, so that interference of a pilot signal can be eliminated.

For example, when N=64, m=6, a terminal may determine P1 according to a certain 6 bits in a data packet thereof, determine P2 according to another 6 bits in the data packet, and determine P1 and P2 respectively according to 2m=12 bits in the data packet, so that information for indicating a preamble sequence does not need to be additionally added in the data packet, thereby saving overhead. Alternatively, the terminal may also generate 6 bits by using several bits in its data packet by using a certain rule, or generate a value [1,64], that is, an integer ranging from 1 to 64, so as to determine P1, and further generate 6 bits by using several bits in its data packet by using a certain rule, or generate a value [1,64], that is, an integer ranging from 1 to 64, so as to determine P2.

In the present embodiment, P1 and P2 may also be generated by using additional 2m bits, but the additional 2m bits also need to be placed in the data, and as a result, the data may increase additional 2m bits, which may reduce the transmission efficiency.

Alternatively, as also shown in Fig. 10, a system defines a sequence generation method for generating N Preamble sequences, wherein the N sequences are generated by means of a ZC sequence generation formula, and specifically, by setting two variables, i. e. a "root" value and a "cyclic shift" value in the ZC sequence formula. Then, the "cyclic shift" that generates P1 is independent and unrelated to the "cyclic shift" that generates P2; or the "root" and the "cyclic shift" that generate P1 are independent from the "root" and the "cyclic shift" that generate P2.

Alternatively, as also shown in Fig. 10, the system defines a sequence generation method for generating N Preamble sequences, wherein the N sequences are generated by a shift register sequence generator, for example, by a maximum length shift register (MLSR) sequence generator, and specifically, by setting different "initial states" of the shift register sequence generator. Then, the "initial state" of P1 is independent from that of P2.

### Embodiment II

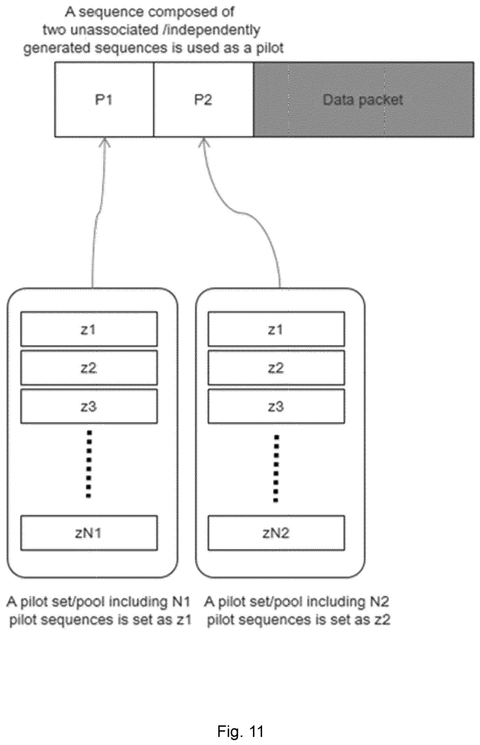

Fig. 11 is a schematic diagram of a method for generating a Preamble sequence according to an embodiment of the present invention. As shown in Fig. 11, the system defines a sequence generation method for generating N1 Preamble sequences, and another sequence generation method for generating N2 Preamble sequences. P1 and P2 are generated by the two different sequence generation methods, respectively, and the generation of P1 is independent from that of P2.

For example, the sequence generation method defined by the system for generating N1 Preamble sequences generates by means of a ZC sequence formula formula1, and the sequence generation method defined by the system for generating N2 Preamble sequences generates by means of another ZC sequence formula formula2. Specifically, different sequences are generated by setting two variables, "root" and "cyclic shift", in a ZC sequence formula, and then the "cyclic shift" of P1 is independent from that of P2; or the "root" and the "cyclic shift" of P1 are independent from those of P2.

For another example, the sequence generation method defined by the system for generating N1 Preamble sequences generates by means of a shift register sequence generator 1, and the sequence generation method defined by the system for generating N2 Preamble sequences generates by means of a shift register sequence generator 2. Specifically, different sequences are generated by setting different "initial states" of the shift register sequence generators, then the "initial state" of P1 is independent from that of P2.

For another example, the system defines a sequence set 1 including N1 Preamble sequences and a sequence set 2 including N2 Preamble sequences. P1 is selected from the sequence set 1, and P2 is selected from the sequence set 2. The index value 1 of P1 selected from the sequence set 1 is independent from the index value 2 of P2 selected from the sequence set 2.

In the present embodiment, the lengths of the pilots in the sequence set 1 including N1 Preamble sequences and the pilots in the sequence set 2 including N2 Preamble sequences may be the same or different.

### Embodiment III

A terminal in a non-connected state transmits a data packet to a base station or an access point, specifically, one transmission includes W pilots, and the pilots are independent or unassociated or unrelated. Here, the W pilots may be one of the following:
W PRACH preamble sequences defined by a LTE standard;
W PRACH preamble sequences defined by an NR standard;
W DMRS sequences defined by the LTE standard;
W DMRS sequences defined by the NR standard;
W maximum length shift register (MLSR) sequences;
W Discrete Fourier Transform (DFT) sequences; and
W Walsh-Hadamard sequences.

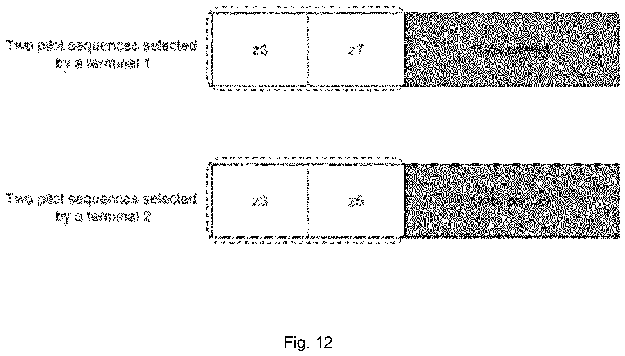

Using W independent or unrelated sequences as preambles reduces the possibility of simultaneous collision". Fig. 12 is a schematic diagram of using unassociated or independently generated sequences as a preamble according to an embodiment of the present invention. As shown in Fig. 12, W=2, the first preamble sequence P1 of both terminal 1 and terminal 2 selects z3, that is, P1 collides, however, the second preamble sequences P2 are different and are respectively z7 and z5, and a receiver can perform channel estimation by using collision-free second preamble sequences, in this way, the data packets of terminal 1 and terminal 2 are demodulated.

The technique of independent multiple pilots refers to that one transmission includes two or more pilots, and the pilots are independent or unassociated or unrelated. In this way, under the same pilot overhead, the probability of simultaneous collision of independent multiple pilots of different terminals is much smaller than that of a conventional single pilot. By means of an iteration-based receiver, for each round, the base station can demodulate data packets of corresponding terminals by means of those pilots having no collision, then reconstruct data and pilots thereof and eliminate same from a received signal, and this iteration is performed until all the data packets of the demodulable terminals are demodulated. Since the probability of simultaneous collision of independent multiple pilots may be much smaller than that of the conventional single pilot, the transmission scheme using independent multiple pilots can support a very high terminal load in the case of non-connected transmission.

### Embodiment IV

In order to reduce pilot collision, as many pilots as possible need to be defined, that is, the number of pilots in a pilot set needs to be as large as possible, and increasing the number of pilots means that the overhead occupied by the pilots also needs to be increased. In addition, it also needs to perform channel estimation and time deviation or frequency deviation estimation on the basis of pilots, so as to complete relevant demodulation of data symbols, hence, each reference signal needs to occupy sufficient resources, and has a reference signal in the whole transmission bandwidth and time, or in other words, each reference signal cannot be too sparse in the whole transmission bandwidth and time, and needs to have a certain density, and in this way, the wireless multi-path channel (i.e. the frequency selective channel) in the whole transmission bandwidth and the frequency offset in the transmission time can be estimated. Hence, in order to ensure non-connected transmission performance, using the conventional pilot scheme will multiply the overhead occupied by the pilots, and significantly increase the detection complexity.

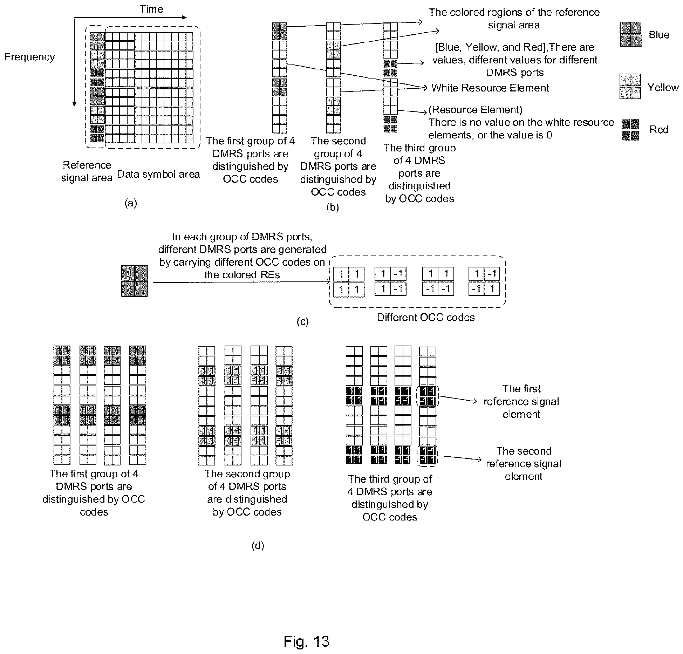

Fig. 13 is a schematic diagram of a demodulation reference signal port set. As shown in Fig. 13, the demodulation reference signal (DMRS) set is a DMRS set defined by the 3GPP New Radio standard protocol, and includes 12 reference signals. Generally, a demodulation reference signal in the standard protocol is also referred to as a demodulation reference signal port (DMRS port).

Fig. 13(a) is a schematic diagram of a physical resource block defined by the 3GPP NR according to an embodiment of the present invention. As shown in Fig. 13(a), the physical resource block includes 14 OFDM (or DFT-S-OFDM or SC-FDMA) symbols in the time domain and 12 sub-carriers in the frequency domain. Each small lattice is a sub-carrier of an OFDM (or DFT-S-OFDM or SC-FDMA) symbol, and is also generally referred to as a resource element (RE). A physical resource block (PRB) shown in Fig. 13(a) totally contains 12*14=168 resource elements (RE). Such a DMRS bears a demodulation reference signal using the first two OFDM symbols, that is, the first two OFDM symbols serve as a DMRS area, that is to say, the resource overhead occupied by the DMRS is 1/7.

The DMRSs can be divided into three groups from the positions of the occupied resource elements (REs), as shown in Fig. 13(b), non-zero symbols (also referred to as non-zero signals, useful signals, etc.) of a first group of DMRSs are borne on blue REs, non-zero symbols of a second group of demodulation reference signals (DMRSs) are borne on yellow resource elements (REs), and non-zero symbols of a third group of demodulation reference signals (DMRSs) are borne on red resource elements (REs). The value of each demodulation reference signal on a white Resource Element (RE) is 0, or there is no signal. Hence, for each demodulation reference signal, not all resource elements (REs) in the demodulation reference signal area have signals. However, for a certain terminal, as long as it uses a certain reference signal or a certain reference signal port, although this reference signal port has no signal on some REs of a reference signal (DMRS) area, generally, the terminal also cannot transmit data by using these REs. From this perspective, the resource overhead occupied by one reference signal or one reference signal port is also 1/7.

Non-zero symbols of each group of demodulation reference signals are borne on the same resource element (RE), and different reference signals can only be distinguished by non-zero symbols with different values. In 3GPP New Radio, different reference signal ports are generally distinguished by a time-domain OCC code and a frequency-domain OCC code. As shown in Fig. 13(c), four demodulation reference signal ports are separated by jointly using OCC codes [1, 1] with the length of 2 in the time domain and OCC codes [1, 1] with the length of 2 in the frequency domain. The case of four reference signals occupying yellow and red Resource Elements (REs) is similar. In this way, 12 demodulation reference signals, i.e., 12 demodulation reference signal ports, of the DMRS set defined by the 3GPP New Radio can be obtained in total.

For ease of description, in the present embodiment, a reference signal borne on several REs adjacent to each other in the time domain and the frequency domain is referred to as a reference signal element (RSE). For example, in Fig. 13, a reference signal borne on four consecutive REs in the time domain is referred to as an RSE, and visually, a reference signal on a blue, yellow or red "four-quadrant grid" in Fig. 13 is referred to as a reference signal element (RSE). In terms of the function of channel estimation, a Reference Signal Element (RSE) is characterized not only by being composed of adjacent resource elements in the time domain or frequency domain, but also by another feature: when channel estimation is performed by using a reference signal, each reference signal element (RSE) can estimate a channel value.

According to this definition, for a demodulation reference signal (DMRS) set defined by the 3GPP New Radio standard protocol as shown in Fig. 13, each reference signal has two RSEs in one PRB bandwidth, and therefore the channel values of two positions within one PRB bandwidth (i.e. in 12 sub-carrier bandwidths) can be estimated. The channel values of 12 sub-carriers within a PRB bandwidth need to be obtained by interpolation of these reference signal element estimation values.

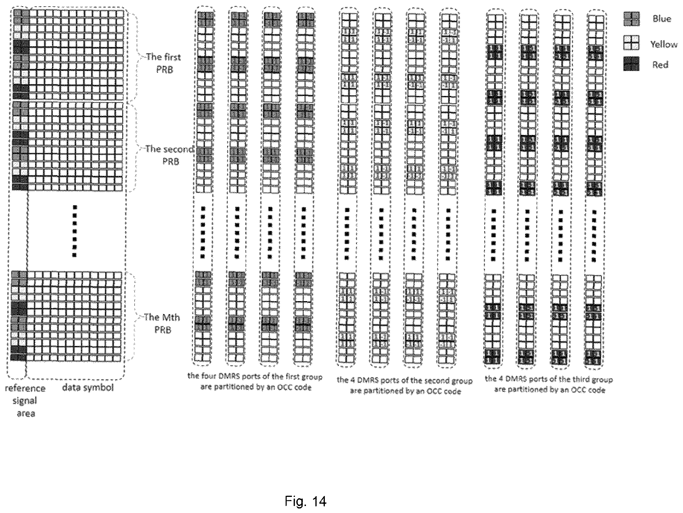

If M PRBs are included in one transmission, for 12 demodulation reference signals (or 12 demodulation reference signal ports) of such a reference signal set, as shown in Fig. 14, each reference signal has 2*M RSEs, the channel values of equally spaced 2*M positions within the whole transmission bandwidth can be estimated, and then the channel values of all 12*M sub-carriers within the transmission bandwidth are obtained by means of interpolation.

Hence, in order to estimate a channel of a whole transmission bandwidth of each access terminal, resources occupied by a conventional demodulation reference signal (or a pilot) are relatively large, or the demodulation reference signal needs a certain density within the whole transmission bandwidth, and cannot be too sparse. In Figs. 13 and 14, it can be said that the density of such demodulation reference signal within the whole transmission bandwidth is two reference signals per PRB, or two RSEs per PRB.

For the system, the overhead of the reference signal is 1/7, which means that the system spends 1/7 of resources and can only design 12 demodulation reference signals. For data transmission in a non-connected transmission state, whether the probability of collision of reference signals autonomously selected by any two terminals is 1/12 and is also very high. Hence, the conventional demodulation reference signal severely limits the number of terminals for data transmission in a non-connected transmission state.

If the reference signal also needs to estimate a certain frequency offset, the resources occupied by each reference signal need to be further increased, or the density of each reference signal in the transmission signal needs to be further increased. For example, it is repeated once in the time domain to estimate the frequency. In this way, the resources occupied by the reference signal are doubled, that is, the overhead is 2/7. That is to say, the system spends 2/7 of resources, and in order to estimate the frequency selection channel and the frequency offset, only 12 demodulation reference signals can be designed. If further, the system needs to deal with a certain timing offset, the resources occupied by the reference signal need to be further increased, for example, 3/7 or even 4/7 of the overhead needs to be spent, so that 12 demodulation reference signals can be designed. With such a large overhead, only such a small number of reference signal sets (or such a small number of reference signal ports) can be obtained, which is the biggest problem of the conventional scheduling-free access scheme based on demodulation reference signals.

If the multi-path channel changes faster in the frequency domain (i.e. the frequency selection feature is more obvious), in order to ensure the accuracy of channel estimation, the density of the demodulation reference signal in the frequency domain needs to be increased, that is, a demodulation reference signal with a larger density in the frequency domain, each demodulation reference signal has three reference signal elements within each PRB bandwidth, so that each PRB may have three estimation values, M PRBs have 3*M estimated values, and then the channels of all sub-carriers of the M PRBs are obtained by means of linear interpolation. Such a reference signal still occupies 1/7 of the overhead of the transmission resources, but only 8 demodulation reference signals can be separated out, which is less than the number defined by the 3GPP New Radio standard protocol. Hence, the channel estimation capability is generally inversely proportional to the number of reference signals.

When a conventional reference signal is applied to a non-connected transmission scenario, the root of the problem faced with is that the task of the reference signal is too heavy: the reference signal is required to estimate the frequency selection channel of the whole transmission channel and estimate the time-frequency offset, and the reference signal is also required to perform terminal user identification; therefore, the reference signal needs to occupy many time-frequency resources to complete such a heavy task. This results in a serious deficiency of the number of reference signals in a certain resource. The number of terminals that can be supported by the non-connected transmission is also limited by the number of reference signals.

In a scenario of non-connected transmission or no-scheduling transmission, a reference signal is also autonomously selected by a user, and therefore different users are likely to select the same reference signal, that is, a collision of reference signals occurs. However, with high overload, the probability of collision of reference signals is very high. Once the reference signals collide, it is difficult for the base station to separate the two users by reference signals. In order to reduce the collision and pollution of a reference signal, and also to estimate a channel and a time-frequency offset, the reference signal needs to be multiplied, a sequence is doubled and lengthened, the overhead is multiplied, and the detection complexity increases exponentially.

In the present embodiment, in order to greatly reduce the task of reference signals, resources occupied by each reference signal may be minimized, or each reference signal may be the sparsest. In this way, the number of reference signals may be maximized, and finally, a non-connected transmission scenario may support more terminals.

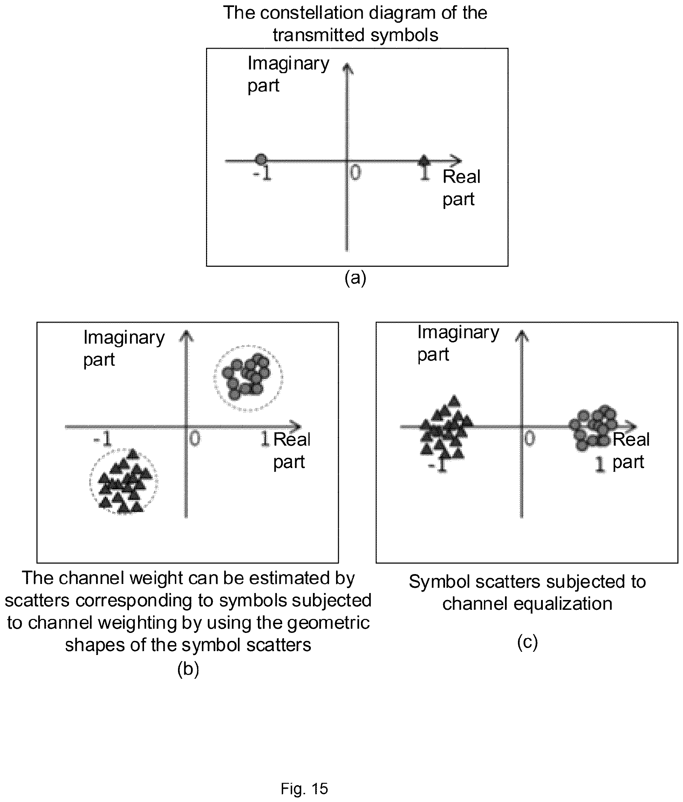

Specifically, in the present embodiment, by using a data-based channel estimation technology rather than a reference signal, a channel of the whole transmission bandwidth and a time-frequency offset are estimated by using the features of data itself, for example, the geometric feature of a constellation diagram of a data symbol. That is to say, it is no longer necessary to estimate the channel and time-frequency offset of the whole transmission bandwidth through the reference signal. Taking channel estimation as an example, in order to simplify the description, a block flat fading channel is taken as an example. Fig. 15 is a schematic diagram of a constellation diagram variation of BPSK symbols according to an embodiment of the present invention. As shown in Fig. 15, a BPSK symbol transmitted by the terminal is shown in Fig. 15(a), and after the BPSK symbol reaches the base station side through the wireless channel and the wireless receiver, it is no longer the constellation diagram of the standard BPSK of Fig. 15(a), instead, a weighting factor, i.e., a rotation plus scaling change, is applied by the wireless channel, in addition, the additive white Gaussian noise (AWGN) of the receiver finally becomes scatters as shown in Fig. 15(b), and each scatter corresponds to one received symbol. It can be determined that, for a low-order modulation signal such as BPSK, a constellation diagram subjected to rotation scaling (i.e. channel weighting) still has a very strong geometric feature, and therefore, channel estimation and balancing may use the geometric feature of the constellation diagram to estimate a rotation scaling amount, and then may reversely rotate the constellation diagram back, thereby completing balancing, as shown in Fig. 15(c). Specifically, as shown in Fig. 15(b), the scatters corresponding to the symbols received by the base station, it can also seen that they are two groups of separated scatters, the base station can obtain two scatter centers by only adding the circular scatters to the triangular scatters respectively, then rotates the scatter center corresponding to the triangular scatters by 180 degrees, and adds same to the scatter center corresponding to the circular scatters, to obtain the final channel weight, i.e., the rotation and scaling amount, of the BPSK symbol.

Therefore, in the embodiments of the present invention, the pilot or reference signal has a much lighter task than that in the conventional scheme, and each reference signal occupies much less resources than that in the conventional scheme; therefore, under a certain overhead, the number of reference signals in the present embodiment is much more than that in the conventional scheme.

In addition, when the base station has a plurality of receiving antennas, R receiving antennas are provided, which can theoretically provide a powerful spatial domain capability to improve the performance of multi-terminal access. In order to obtain this spatial domain capability, an embodiment of the present invention proposes that an "extremely sparse" reference signal may be used to estimate a spatial domain channel of each access terminal, hₖ = [hₖ₁, hₖ₂,... h_{kR}]^{t}, where t is a transpose operator. The estimated spatial domain channels are then used to perform spatial domain fusion on the received signals. Specifically, performing spatial domain fusion on the signals of the terminal k is sₖ=hₖ'*y, where y=[yₖ₁, yₖ₂,... y_{kR}]^{t} is the received signal of the R receiving antennas, and hₖ' is the conjugate transpose of hₖ. Then the receiver uses the data symbol sₖ subjected to spatial domain fusion to estimate the channel of the entire transmission bandwidth of the signal of the terminal k and to estimate the time-frequency offset, then compensates the channel and the time-frequency offset for the data symbol sₖ subjected to spatial domain fusion, and finally demodulates and decodes the data symbol of the compensated channel and time-frequency offset.

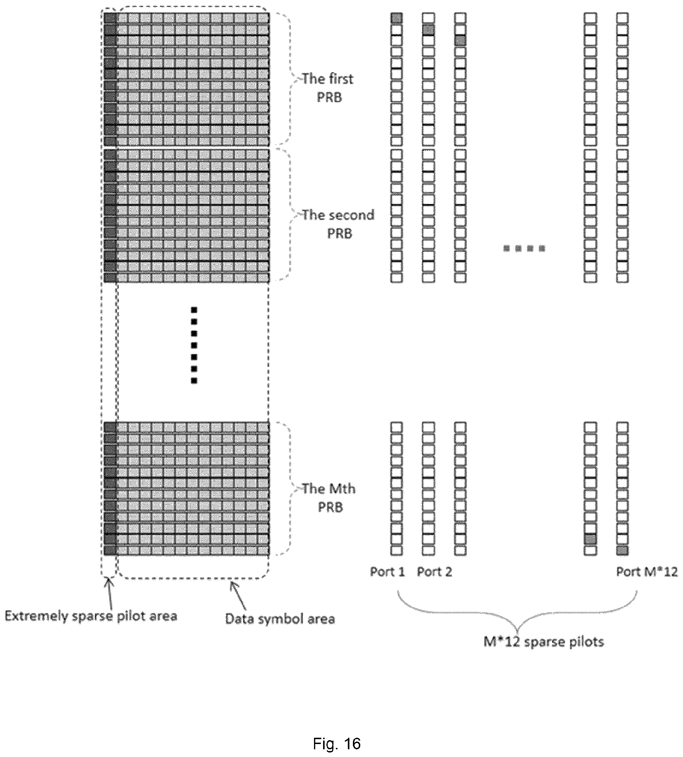

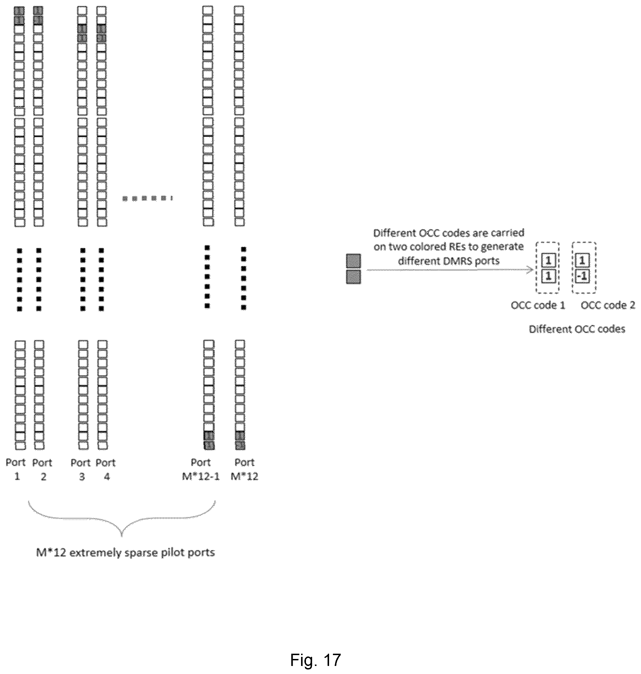

In the present embodiment, reference signals are not used to estimate the channel within the whole transmission bandwidth, nor are they used to estimate the time-frequency offset. Therefore, the reference signals provided in the present embodiment are extremely sparse. Fig. 16 is a schematic diagram of sparse pilots according to an embodiment of the present invention. As shown in Fig. 16, a transmission includes M PRBs of time-frequency resources, each Physical Resource Block (PRB) includes 14 OFDM (or DFT-S-OFDM or SC-FDMA) symbols in the time domain and 12 sub-carriers in the frequency domain. 1/14 of resources are used for transmitting a reference signal, that is, 12*M Resource Elements (REs) are used for transmitting a reference signal. However, each reference signal defined by the system has a non-zero symbol (a non-zero signal, or a useful signal) only on one resource element (RE), and there is no signal elsewhere (or the value is 0 elsewhere). In this way, a reference signal area that occupies 1/14 of the overhead can divide a total of 12*M reference signals. Specifically, if there are 6 PRBs and 1/14 of overhead, 6*12 = 72 reference signals may be divided, which is much larger than 8 or 12 in a NR system (such reference signals also occupy 1/7 of overhead of the transmission resources). Fig. 17 is a schematic diagram of reference signal distribution according to an embodiment of the present invention. As shown in Fig. 17, each reference signal defined by the system has a non-zero symbol (a non-zero signal, or a useful signal) only on one resource element (RE), every two REs separate two reference signals by using OCCs with the sequence length of 2, and there is no signal elsewhere (or the value is 0 elsewhere). In this way, a reference signal area that occupies 1/14 of the overhead can divide a total of 12*M reference signals. Specifically, if there are 6 PRBs and 1/14 of overhead, 6*12 = 72 reference signals may be divided, which is much larger than 8 or 12 in a NR system.

The sparse pilot actually refers to that the non-zero elements of each pilot in the pilot set are very few, for example, there are only 1 to 4 non-zero elements, so that the number of pilots can be significantly increased without increasing the pilot resource overhead, thereby significantly reducing the probability of pilot collision. The base station estimates a part of information of the wireless channel from the sparse pilot, without estimating the entire information of the wireless channel from the sparse pilot. The base station further extracts channel information from the data symbols, and then uses the channel information to balance the data symbols.

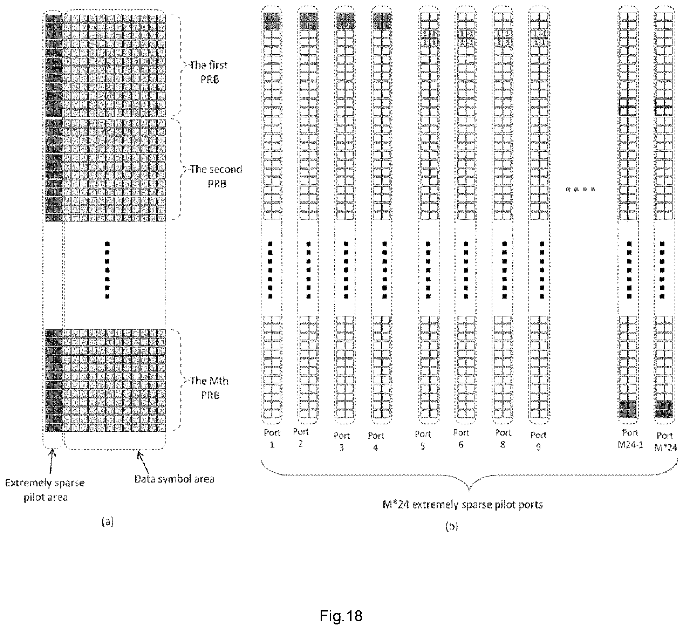

Fig. 18 is a schematic diagram of the implementation of defining a reference signal according to an embodiment of the present invention. As shown in Fig. 18(a), the reference signal defined by the system occupies two OFDM symbols. As shown in Fig. 18(b), each reference signal defined by the system only has non-zero symbols (non-zero signals, or useful signals) in a group of four adjacent resource elements (RE), but there are four reference signals multiplexing a group of four adjacent REs. The four reference signals multiplexing the same group of four adjacent REs are distinguished by an OCC code. In this way, in the transmission of M PRBs, a reference signal area that occupies 1/7 of the overhead can divide a total of 24*M reference signals. Specifically, if there are 6 PRBs and 1/7 of overhead, 6*24 = 144 reference signals may be divided, which is much larger than 8 or 12 in a NR system. It also indicates that the number of extremely sparse pilots is proportional to the number of PRBs.

In the present embodiment, the pilot is only used for spatial domain fusion, but cannot be used for channel equalization, and may be considered as a spatial domain fusion reference signal.

It should be noted that, although the extremely sparse reference signals shown in the relevant diagrams of the embodiments of the present invention are all in the first one or two symbols of the transmission resources, the present application does not limit the positions of the extremely sparse reference signals, for example, the positions of the extremely sparse reference signals may also be in the middle symbols of the transmission resources.

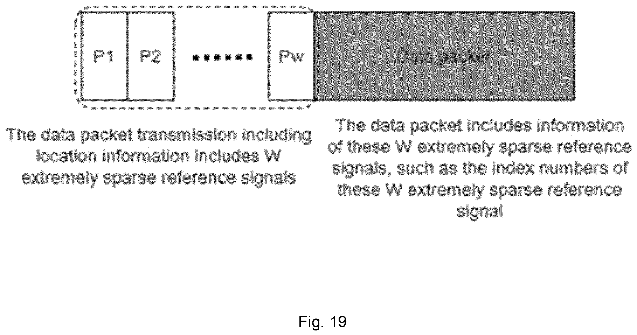

In the present embodiment, the technique of independent multiple pilots and the technique of extremely sparse pilots may be combined to further reduce the pilot collisions of the terminal, thereby further improving the load of the terminal. That is to say, the data packet transmission including the cell identifier or the base station identifier or beam identifier or the wireless signal access point identifier that are received by the terminal and the strength information thereof includes W pieces of extremely sparse reference signals, furthermore, the data packet includes information of the W extremely sparse reference signals. Fig. 19 is a schematic diagram of a data packet including W extremely sparse reference signals according to an embodiment of the present invention. As shown in Fig. 19, a data packet includes W index numbers of extremely sparse reference signals, and thus, once a data packet of a certain terminal is successfully decoded, information of all extremely sparse pilots used in this transmission by this terminal can be known, and interference cancellation of pilot signals can be performed.

### Embodiment V

In a cellular mobile communication network, a mobile phone terminal (i.e. a first communication node) is in a non-connected state, and transmits a data packet to a base station (i.e. a second communication node) on a pre-configured common channel, wherein the data packet comprises multiple cell identifiers found by the mobile phone terminal through a cell search process.

Further, if the base station is configured with a plurality of antennas, the base station may also transmit signals through beams, and in this case, the mobile phone terminal may also search for beams of the base station. In this way, when a mobile phone terminal is in a non-connected state, and transmits a data packet to a base station on a pre-configured public channel, wherein the data packet may include a base station beam identifier viewed by the mobile phone terminal.

In some scenarios, the terminal may also be located in other systems. In this case, the terminal may obtain identifiers of access points of these systems, and then may send a data packet including the identifiers of the access points to the base station.

In the present embodiment, if the terminal is located in a wireless local area network, that is, a WIFI system, the terminal may obtain an identifier of the wireless local area network router or the WIFI router, for example, an MAC address of the router. Then, the terminal may send the data packet including the identifier of the WIFI router to the base station.

In the present embodiment, if a terminal is located in a cell-free wireless communication system, the terminal may obtain an identifier of a Cell-free access point (AP). Then the terminal may transmit a data packet including the Cell-free AP identifier to the base station.

In the present embodiment, if a terminal is in a Bluetooth wireless communication system, the terminal may obtain an identifier of a Bluetooth access point device, and then the terminal may send a data packet including the Bluetooth device identifier to a base station.

Specifically, in the present embodiment, the data packet further includes at least one piece of the following information:
the strength of a wireless signal corresponding to the cell identifier;
the strength of a wireless signal corresponding to the base station identifier;
the strength of a beam corresponding to the beam identifier; and
the strength of a wireless signal corresponding to the wireless signal access point identifier.

The signal strength herein may be a Received Signal Strength Indicator (RSSI).

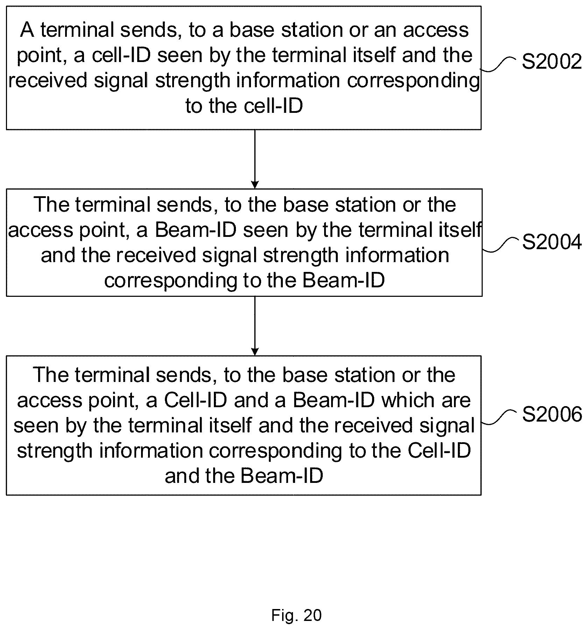

Fig. 20 is a flowchart of an information transmission method according to still another embodiment of the present invention. As shown in Fig. 20, the method includes the following steps:
Step 2002: a terminal sends, to a base station or an access point, a cell-ID seen by the terminal itself and the received signal strength information corresponding to the cell-ID.

Specifically, the terminal transmits a data packet, and the data packet includes the Cell-ID seen by the terminal and the received signal strength information corresponding to the Cell-ID, but does not include any information related to the identity of the terminal or the terminal ID.

Step S2004: the terminal sends, to the base station or the access point, a Beam-ID seen by the terminal itself and the received signal strength information corresponding to the Beam-ID.

Specifically, the terminal transmits a data packet, and the data packet includes the Cell-ID seen by the terminal and the received signal strength information corresponding to the Cell-ID, but does not include any information related to the identity of the terminal or the terminal ID.

Step 2006: the terminal sends, to the base station or the access point, a Cell-ID and a Beam-ID which are seen by the terminal itself and the received signal strength information corresponding to the Cell-ID and the Beam-ID.

Specifically, the terminal transmits a data packet, and the data packet includes the Cell-ID and the Beam-ID which are seen by the terminal and the received signal strength information corresponding to the Cell-ID and the Beam-ID, but does not include any information related to the identity of the terminal or the terminal ID.

In the present embodiment, the process that the terminal transmits relevant information is simplified as much as possible. That is to say, the terminal directly transmits, in an idle state or an inactive state, the Cell-ID and the received signal strength information corresponding to the Cell-ID, or the Beam-ID and the received signal strength information corresponding to the Beam-ID. The terminal does not need to enter the connected state or the active state before transmission, thereby greatly reducing the power consumption caused by the terminal transmitting the location information.

The embodiments of the present invention further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic apparatus, including a memory and a processor; the memory stores a computer program, and the processor is configured to run the computer program, so as to execute the operations in any one of the method embodiments.

In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Hence, the present invention is not limited to any specific combinations of hardware and software.

The above is only preferred embodiments of the disclosure and is not intended to limit the disclosure. Those skilled in the art may make various modifications and variations. Any modifications, equivalent replacements, improvements, etc. made within the principle of the present invention shall all fall within the scope of protection of the present invention.

## Claims

1. An information transmission method, applied to a first communication node, comprising:
transmitting, by the first communication node in a non-connected state, a data packet to a second communication node on a pre-configured common channel, wherein the data packet comprises at least one piece of the following information:
a cell identifier received by the first communication node;
a base station identifier received by the first communication node;
a beam identifier received by the first communication node; and
an identifier of a wireless signal access point received by the first communication node.

2. **The** method according to claim 1, wherein the identifier of the wireless signal access point comprises one of the following:
an identifier of an access point of a cell-free communication system;
an identifier of a wireless local area network access point;
an identifier of a wireless wide area network access point; and
an identifier of a Bluetooth access point.

3. **The** method according to claim 1, wherein the data packet further comprises at least one piece of the following information:
strength of a wireless signal corresponding to the cell identifier;
strength of a wireless signal corresponding to the base station identifier;
strength of a beam corresponding to the beam identifier; and
strength of a wireless signal corresponding to the wireless signal access point identifier.

4. **The** method according to claim 1, wherein
the cell identifier comprises cell identifiers of a plurality of cells;
the base station identifier comprises base station identifiers of a plurality of base stations;
the wireless signal access point identifier comprises identifiers of a plurality of wireless signal access points; and
the beam identifier comprises identifiers of a plurality of beams.

5. The method according to claim 1, wherein the cell identifier is partial information among total identifier information of a cell, the base station identifier is partial information of total identifier information of a base station, the wireless signal access point identifier is partial information among total identifier information of the wireless signal access point, and the beam identifier is partial information among total beam identifier information.

6. The method according to claim 1, wherein before the first communication node transmits the data packet to the second communication node on a pre-configured common channel, the method further comprises:
receiving, by the first communication node, broadcast signaling sent by the second communication node for indicating the position of the pre-configured common channel.

7. The method according to claim 1, wherein before the first communication node transmits the data packet to the second communication node, the method further comprises:
spreading, by means of an spreading sequence, modulation symbols formed after performing code modulation on the data packet, so as to obtain spreading symbols; and
transmitting the spreading symbols to the second communication node.

8. The method according to claim 7, wherein the spreading sequence is determined by information in the data packet.

9. The method according to claim 8, wherein the spreading sequence is from a set comprising V spreading sequences, the spreading sequence is determined from the set of spreading sequences by log2(V) bits in the data packet, V being an integer greater than 1.

10. The method according to claim 1, wherein transmitting the data packet to the second communication node comprises:
determining W pilots; and
transmitting the data packet and the W pilots together to the second communication node, wherein W is an integer greater than 1.

11. The method according to claim 10, wherein the W pilots are independent.

12. The method according to claim 10, wherein the W pilots are determined by information in the data packet.

13. The method according to claim 12, wherein the W pilots are determined by a plurality of bits in the data packet.

14. The method according to claim 13, wherein the W pilots are from a pilot set comprising M pilots, each pilot is determined from the pilot set by log2(M) bits in the data packet, and M is an integer greater than 1.

15. The method according to claim 10, wherein at least two pilots among the W pilots come from different pilot sets.

16. The method according to claim 10, wherein among the W pilots at least two pilots have different lengths.

17. The method according to claim 10, wherein for W pilots, each pilot has only U symbols that are non-zero values, U being an integer greater than 0 and less than 5.

18. The method according to claim 10, wherein W is 2.

19. The method according to claim 1, wherein transmitting the data packet to the second communication node comprises:
determining one pilot, wherein only U symbols of the pilot are non-zero values, and U is an integer greater than 0 and less than 5; and
transmitting the data packet and the pilot to the second communication node together.

20. The method according to claim 1, wherein the non-connected state is one of the following: an idle state and an inactive state, wherein the non-connected state is a state when a connection between the first communication node and the second communication node is not established.

21. The method according to claim 1, wherein the data packet comprises information relating to the identity of the first communication node.

22. The method according to claim 1, wherein the data packet does not comprise information relating to the identity of the first communication node.

23. An information transmission method, applied to a second communication node, comprising:
receiving, on a public channel, a data packet sent by a first communication node in a non-connected state, wherein the data packet comprises at least one piece of the following information:
a cell identifier received by the first communication node;
a base station identifier received by the first communication node;
a beam identifier received by the first communication node; and
an identifier of a wireless signal access point received by the first communication node.

24. **The** method according to claim 23, wherein before receiving, by the second communication node, the data packet on the public channel, the method further comprises:
sending, to the first communication node, broadcast signaling used for indicating the position of the common channel.

25. An information transmission apparatus, applied to a first communication node, comprising:
a first sending module, configured to send a data packet to a second communication node on a pre-configured common channel when the first communication node is in a non-connected state, wherein the data packet comprises at least one piece of the following information:
a cell identifier received by the first communication node;
a base station identifier received by the first communication node;
a beam identifier received by the first communication node; and
an identifier of a wireless signal access point received by the first communication node.

26. The apparatus according to claim 25, further comprising:
a first receiving module, configured to receive broadcast signaling sent by the second communication node and used for indicating the position where the pre-configured common channel is located.

27. An information transmission apparatus, applied to a second communication node, comprising:
a first receiving module, configured to receive, on a public channel, a data packet sent by a first communication node in a non-connected state.

28. The apparatus according to claim 27, further comprising:
a first sending module, configured to send, to the first communication node, broadcast signaling used for indicating the position of the common channel.

29. A computer readable storage medium, storing a computer program, wherein the computer program is configured to, when executed by a processor, implement the steps of the method according to any one of claims 1 to 22 are implemented, or the steps of the method according to any one of claims 23 to 24.

30. An electronic device, comprising a memory, a processor, and a computer program stored on the memory and capable of running on the processor, wherein the processor is configured to execute the computer program to implement the steps of the method according to any one of claims 1 to 22, or implement the steps of the method according to any one of claims 23-24.
